# EUROPEAN PATENT SPECIFICATION

(11) **EP 4 240 171 B1**
(45) Date of publication and mention of the grant of the patent: **13.11.2024**
(21) Application number: 21802340.6
(22) Date of filing: 02.11.2021
(51) Int. Cl.: A23G 1/00, A23G 1/32, A23G 1/56

(54) **COCOA PRODUCT AND METHOD FOR MAKING THEREOF**
KAKAOPRODUKT UND VERFAHREN ZUR HERSTELLUNG DAVON
PRODUIT DE CACAO ET PROCÉDÉ POUR LA FABRICATION DE CE PRODUIT

(30) Priority: 06.11.2020 EP 20206082
(43) Date of publication of application: 13.09.2023
(73) Proprietor: Société des Produits Nestlé S.A., 1800 Vevey (CH)
(72) Inventor: MORA, Federico, 1110 Morges (CH); VILANOVA, Elsa, 1003 Lausanne (CH); RESINK-ROMBOUTS, Marina, 1807 Blonay (CH); POISSON, Luigi, 1796 Courgevaux (CH); SPRENG, Stefan, 1350 Orbe (CH); SARRAZIN-HORISBERGER, Céline, 1433 Suchy (CH); OKAMURA, Satoshi, 1010 Lausanne (CH)
(74) Representative: Ducreux, Marie
(86) International application number: PCT/EP2021/080356
(87) International publication number: WO 2022/096444

(56) References cited:
- EP-A1- 1 026 164
- EP-A1- 1 537 790
- WO-A1-2008/131912
- WO-A1-2017/208058
- WO-A2-2009/092606
- GB-A- 562 123
- US-A- 4 755 391
- US-A1- 2009 263 556
- US-A1- 2018 271 928
- US-A1- 2019 029 288
- THOMAS-BARBERAN F ET AL: "A new process to develop a cocoa powder with higher flavanoid monomer content and enhanced bioavailability in healthy humans", JOURNAL OF AGRICULTURAL AND FOOD CHEMISTRY,, vol. 55, 18 April 2007 (2007-04-18), pages 3926 - 3935, XP002520349, ISSN: 0021-8561, [retrieved on 20070418], DOI: 10.1021/JF070121J

## Description

### Field of the Invention

The present invention relates to a cocoa product containing elevated amounts of antioxidant molecules. Further aspects of the invention are the use of this product for making a beverage and into a capsule and to the process of making this product.

### Background of the Invention

Cocoa powder is produced from cocoa nibs, coming from fermented cocoa beans, which have been, dried, roasted and ground into liquid cocoa mass. The nibs are usually alkalized before, during or after roasting process. This determines the colour and taste of the cocoa mass, which, as an intermediate or semi-finished product, is supplied to the chocolate industry and is also the basis for the production of cocoa powder and cocoa butter. Alkalizing cocoa also makes it darker colour, mellow flavour and dissolves easily into liquids. The cocoa butter is then removed through pressing affording cocoa cakes, disks with a thickness of approximately five centimetres. These cakes are broken up and ground into a fine, unsweetened cocoa powder. The powder is the substance which contains the aroma, taste and colour of cocoa. Cocoa powder can be added to numerous food products for flavour and colour, such as biscuits, puddings, deserts, cream, filled chocolate, ice cream, etc. Beverages made from cocoa powder, either reconstituted in cold or hot liquid are very popular. Mixed with sugar and diluted with milk cocoa powder turns into a mild chocolate drink.

Cocoa powder is divided into high fat powder, medium fat cocoa powder, low fat powder and ultra-low fat powder according to the content of cocoa butter. In the national standard, the cocoa butter content of high-fat cocoa powder is ≥20.0%, the cocoa butter content of the medium-fat cocoa powder is 14.0 to 20%, the cocoa butter content of low-fat cocoa powder is 10.0-14.0% and the cocoa butter content of ultra-low cocoa powder is 0.1-2%. The high-fat cocoa powder mentioned in the industry has a cocoa butter content of 20-24% cocoa butter, a cocoa butter content of medium-fat cocoa powder of 10-12% and a cocoa butter content of a low-fat powder of 8%. Different processing conditions result in different cocoa powders with different characteristics. For example, ultra-low fat cocoa powders are typically produces by solvent extraction.

To be used in beverages, such as cocoa-flavoured milk beverages or cocoa instant drinks, it is desirable that the powder can easily and instantly dissolve into cold or hot liquids, such as water. However, in general, cocoa products are not as dissolvable or soluble as coffee products and cocoa powders are currently not completely dissolvable in water. To ensure proper dissolution of cocoa products in water, it is commonly advised to first make a slurry by mixing a small part of the liquid into all of the cocoa powder, and then dilute the slurry with the rest of the liquid. Key components and mechanisms causing the insolubility of cocoa products are not well known. For example, wettability and dissolution of the cocoa powder may be decreased by the fat contained in the powder, for example due to residual cocoa butter. Insoluble components making part of the cocoa products may also be responsible for insolubility and sedimentation of cocoa products.

US 5389394 discloses that cocoa nibs are extracted at temperatures of 40°C to 100°C under atmospheric pressure, resulting into a fat-free cocoa extract. The extract can be concentrated and dried into a powder to be used as an ingredient for example in RTD. However, this extraction method results in a yield of cocoa extract substances for the cocoa nibs of only 9.2%.

US 2009/0263556 discloses a method of extracting cocoa powder for producing a soluble cocoa product to be used as an ingredient. The process uses a mixture of enzymatic treatment and precipitation with solvents to separate the soluble fraction from the insoluble cocoa powder. US 2009/0263556 further discloses cocoa-derived material having improved solubility, said cocoa-derived material comprising a soluble cocoa powder and a cocoa extract.

US 2380158 claims a method for producing a fat-free aqueous cocoa by extracting coarsely broken nibs with water between 100°C and 180°C, resulting in an extract where part of the non water soluble polysaccharides are hydrolysed and recovered. The main purpose is to obtain a higher yield in the fat extraction of the nibs. By removing part of the water-soluble fraction, higher yield are obtained for the pressing of the butter. Moreover, the extract is alkalized and oxidized for colour development.

Polyphenols are abundant in cocoa beans, especially epicatechin. Epicatechin have been reported to have antioxidant capacity. About 60% of the total polyphenols in raw cocoa beans is flavanol monomers (epicatechin and catechin) and procyanidins (dimer and trimer). However, current processes to produce cocoa powder do not allow to extract efficiently or to preserve the epicatechin level in a cocoa extract.

WO 2017/208058 discloses a cocoa powder having a high content in polyphenols and a process to produce cocoa based product having a high polyphenol content. The epicatechin content is greater or equal than 15 g/kg; the ratios of epicatechin in % by weight to theobromine are of 0,65-0.78 and the ratio of procyanidin B2 in % by weight to theobromine is 0,42.

WO 2008/131912 discloses a cocoa extract having a polyphenol content of at least 27% by weight for use in weight management. In particular, the cocoa extract contains 5-10% monomers by weight of the extract, including at least 5% epicatechin and a theobromine content of at least 5% by weight.

WO2009/092606 discloses a cocoa powder having a polyphenol content of at least 5% by weight for skin benefit. In particular, the cocoa powder comprises at least 5mg/g of epicatechin and a theobromine content of at least 1% by weight.

EP 1 026 164 discloses a process to produce polyphenolic antioxidant with low purine content from cocoa. The cocoa product obtained comprises 11 % by weight of epicatechin and 3 % by weight of theobromine, resulting in a ratio of epicatechin in % by weight to theobromine of 3.67.,

US 2019/0029288 discloses a cacao-derived water extract that contains large amounts of polyphenols. In particular, the cacao-derived water extract comprises 5 mg/g to 20 mg/g theobromine, epicatechin in an amount between 103.5 to 132.4 microg/ml, procyanidin B2 in an amount of between 46.8 to 124.2 microg/ml and procyanidin C1 in an amount between 39.5 to 61 microg/ml.

US 2018/271928 discloses a cacao extract comprising a ratio of epicatechin in % by weight to theobromine in % by weight of 1.46 to prevent or reduce risk of artherosclerosic pathology.

Tomas-Barberan et al. (J. Agr. Food Chem. 2007, 55, 3926-3935) discloses cocoa rich in polyphenols, comprising theobromine in an amount of 182.89 mg/250 ml, epicatechin in an amount of 138.15 mg/250 ml and procyanidin B2 in an amount of 68.79 mg/250 ml.

None of the above-mentioned documents disclose a cocoa product that is that is enriched in epicatechin, procyanidin C1 and procyanidin B2 that has superior antioxidant properties.

US 4,755,391 discloses a process for removing substantially all the theobromine and caffeine present in cacao beans.

GB 562,123 discloses a method of treating cocoa nibs to increase extraction yields and to obtain substantially fat-free aqueous cocoa extract that is easily soluble in cold liquid.

Ways to preserve or increase the amount of polyphenols are not addressed in the above-mentioned documents.

The present invention relates to a cocoa product providing naturally satisfactory taste, colour and aroma and has improved solubility, for example in water, so it can be conveniently used in different applications. Finally, the present invention provided a cocoa product that has unexpected antioxidant properties.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide new product to overcome at least some of the inconveniences described above.

The object of the present invention is achieved by the subject matter of the independent claims. The dependent claims further develop the idea of the present invention.

Accordingly, the present invention provides in a first aspect a cocoa product comprising a ratio of epicatechin in % by weight to theobromine in % by weight of at least 0.2, a ratio of procyanidin C1 in % by weight to theobromine in % by weight of at least 0.005 and a ratio of procyanidin B2 in % by weight to theobromine in % by weight of at least 0.04..

A second aspect of the invention relates to the use of a cocoa product for producing a ready-to-drink or a powdered beverage.

A third aspect of the invention relates to the use of a cocoa product in a capsule and/or a beverage system.

A fourth aspect of the invention relates to a process for manufacturing a cocoa product, comprising the steps
a. providing roast and ground cocoa nibs;
b. extracting first said roast and ground cocoa nibs with water at temperature between 95°C and 115°C at a draw-off ratio between 2 to 4, for 20 to 40 minutes;
c. further extracting the roast and ground cocoa nibs of step b) with water at temperature between 160°C and 180°C at a draw-off ratio between 2 and 4, for a duration of between 20 to 40 minutes; and optionally
d. evaporating the extract of step c) to obtain a cocoa product.

The inventors have found that the cocoa product of the present invention has surprising antioxidant capacity. Indeed, the cocoa product of the present invention comprises significant level of antioxidant compounds, such as epicatechin, a molecule that is normally absent in processed cocoa products.

The inventors have also surprisingly found that thermal reactions taking place during hot extraction of cocoa nibs seem to preserve epicatechins in final cocoa product. The hot extraction further favors the formation of alkenals, volatile aroma compounds that naturally provides cocoa flavor. Alkenals are typically not found in cocoa products produces with process involving alkalization steps for example. Significant levels of alkenals in the cocoa product of the present invention results in an intense cocoa flavor and aroma.

### Brief Description of the Drawings

Figure 1 shows the amounts of antioxidant compounds epicatechin, procyanidin B2 and procyanidin C1 in the cocoa product of the invention.
Figure 2 shows the concentrations of alkyl and phenyl alkenal (B) in the cocoa product of the present invention.
Figure 3 shows the antioxidant capacity of the cocoa product according to the present invention.

### Detailed Description of the invention

Consequently, the present invention relates in part to a cocoa product comprising a ratio of epicatechin in % by weight to theobromine in % by weight of at least 0.2, a ratio of procyanidin C1 in % by weight to theobromine in % by weight of at least 0.005 and a ratio of procyanidin B2 in % by weight to theobromine in % by weight of at least 0.04. In one embodiment, the cocoa product comprises a ratio of epicatechin in % by weight to theobromine in % by weight between 0.2 and 1.2.

Epicatechins are phytochemical compounds, classified as flavanol found in a variety of fruits, plant-based food and beverages. Several beneficial biological effects have been associated with epicatechins, such as increasing plasma antioxidant activity, brachial artery dilatation, fat oxidation, and promotion of gut health. Epicatechins can usually be found in cocoa in amount ranging from about 1.5 to 2.8 mg of epicatechin per gram of cocoa, but the more pure and less processed the cocoas is, the higher the concentration of flavanols inside cocoa.

Theobromine is a bitter xanthine alkaloid found in cocoa, coffee, tea leaves and numbers of other foods. The variation of the amount of theobromine was found to be quite stable in different cocoa products (see Table 2), independently of the processing method, while the variation of the amounts of epicatechin was important.

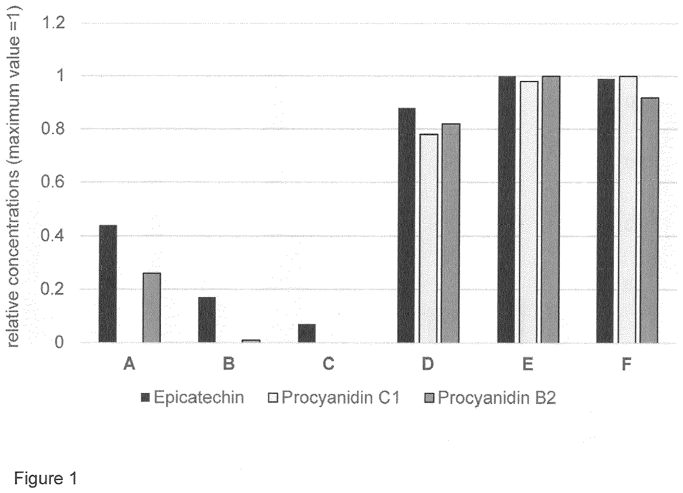

The inventors have found that the cocoa product according to the present invention has significant concentration of epicatechins despite the fact that the cocoa product has been heavily processed. It can be seen from Figure 1 and in Table 2 that the different samples according to the present invention (samples D, E and F) have significantly higher amounts of epicatechin as compared to comparative samples (samples A, B and C).

In one embodiment the cocoa product contains between 0.8 % to 4% by weight of epicatechin.

In one aspect of the present invention, the cocoa product contains epicatechin in an amount of between 8 mg and 40 mg epicatechin per gram of cocoa. The amounts of epicatechin found in the cocoa product according to the present invention are surprisingly higher than the usual amounts found in pure cocoa products, such as in dark chocolate. Without to be bound by the theory, the inventors believe that epicatechin is actually enriched in the cocoa product.

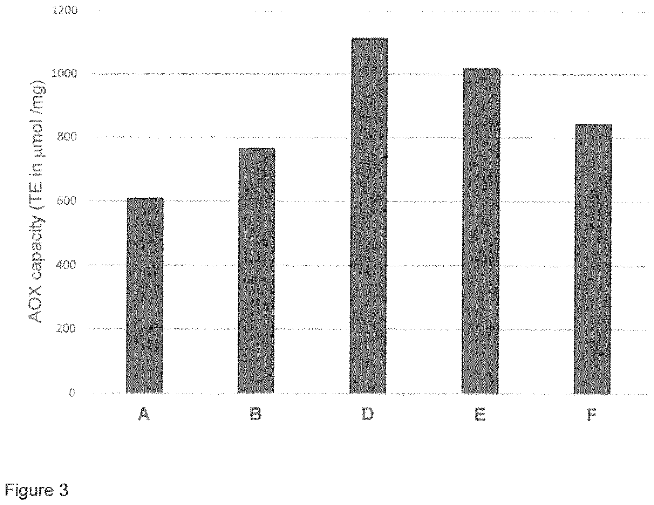

The elevated levels of epicatechin found in the cocoa product according to the present invention advantageously confers increased antioxidant capabilities to the cocoa product as can be seen in Figure 3.

Procyanidins are a type of polyphenolic substances (in particular they are a subgroup of the proanthocyanidin class of flavonoids) found in various part of plants such as flowers, fruits, berries, seeds and bark. It is for example found in cocoa beans, red wine and apples. Procyanidins have antioxidant properties. Procyanthocyanidins have a complex structure being oligomers (dimers to pentamers) or polymers (six or more units, up to 60) of catechins or flavanols which are joined by carbon-carbon bonds. Procyanidins consists exclusively of catechin and/or epicathechin: procyanidin B2 consists of two epicatechin monomers and procyanidin C1 consists of three epicatechin monomers.

In an embodiment the cocoa product has a ratio of procyanidin C1 in a % by weight to theobromine in a % by weight of at least 0.005. In another embodiment the ratio of procyanidin C1 in a % by weight to theobromine in a % by weight is between 0.005 and 0.3.

In one embodiment the cocoa product contains between 0.01% to 1% by weight of procyanidin C1. Preferably, the cocoa product has between 0.01% to 0.1% by weight of procyanidin C1, more preferably between 0.05% to 0.08% by weight of procyanidin C1.

In an embodiment the cocoa product has a ratio of procyanidin B2 in a % by weight to theobromine in a % by weight of at least 0.04. In another embodiment the ratio of procyanidin B2 in a % by weight to theobromine in a % by weight is between 0.04 and 0.3.

In one embodiment the cocoa product contains between 0.15% to 1% by weight of procyanidin B2. Preferably, the cocoa product has between 0.15% to 0.5% by weight of procyanidin B2, most preferably between 0.15% to 0.3% by weight of procyanidin B2.

The inventors have found that the amount of procyanidin B2 and procyanidin C1 in the cocoa product of the present invention are significantly higher as compared to cocoa powders prepared from commercially available cocoa products (Table 2). These elevated amounts of procyanidin B2 and procyanidin C1 are contributing to the increased antioxidant capabilities demonstrated by the cocoa product of the present invention (Table 5 and Figure 3).

In one aspect of the present invention, the cocoa product has a ratio of epicatechin in % by weight to theobromine in % by weight of at least 0.2, a ratio of procyanidin C1 in a % by weight to theobromine in a % by weight of at least 0.005 and a ratio of procyanidin B2 in a % by weight to theobromine in a % by weight of at least 0.04.

In another aspect, the cocoa product contains between 0.8 to 4% by weight of epicatechin, between 0.01% to 1% by weight of procyanidin C1 and between 0.15% to 1% by weight of procyanidin B2.

Alkyl and phenyl alkenals are volatile compounds that can participate to taste and aroma. Alkyl and phenyl alkenals provide intense cocoa-like, floral, honey, and herbaceous notes.

Alkyl and phenyl alkenals are α,β-unsaturated aldehydes with an alkyl group on the β-atom and an alkyl group (2-alkyl-2-alkenals) or a phenyl group (2-phenyl-2-alkenals) on the α-carbon. These unsaturated aldehydes can be *cis, trans,* or mixtures of the two isomers and are generated via the aldol condensation of two saturated aldehydes issued by the Strecker degradation of amino acids. The Strecker degradation is an oxidative deamination of amino acids via interaction with α-dicarbonyl compounds.

Alkyl alkenals are 3-methyl-2-butenal and 2-isopropyl-5-methyl-2-hexenal. Phenyl alkenals are 2-phenyl-2-butenal, 4-methyl-2-phenyl-2-pentenal and 5-methyl-2-phenyl-2-hexenal.

In one embodiment the cocoa product comprises at least 145 µg/kg alkyl and phenyl alkenals, preferably at least 200 µg/kg alkyl and phenyl alkenals, more preferably at least 300 µg/kg alkyl and phenyl alkenals.

In another embodiment the cocoa product comprises between 145 µg/kg and 8000 µg/kg alkyl and phenyl alkenals, preferably between 200 µg/kg and 8000 µg/kg alkyl and phenyl alkenals, more preferably between 300 µg/kg and 8000 µg/kg alkyl and phenyl alkenals.

In one aspect of the present invention, the cocoa product comprises between 145 µg/kg and 7000 µg/kg alkyl and phenyl alkenals, preferably between 200 µg/kg and 7000 µg/kg alkyl and phenyl alkenals, more preferably 300 µg/kg and 7000 µg/kg alkyl and phenyl alkenals.

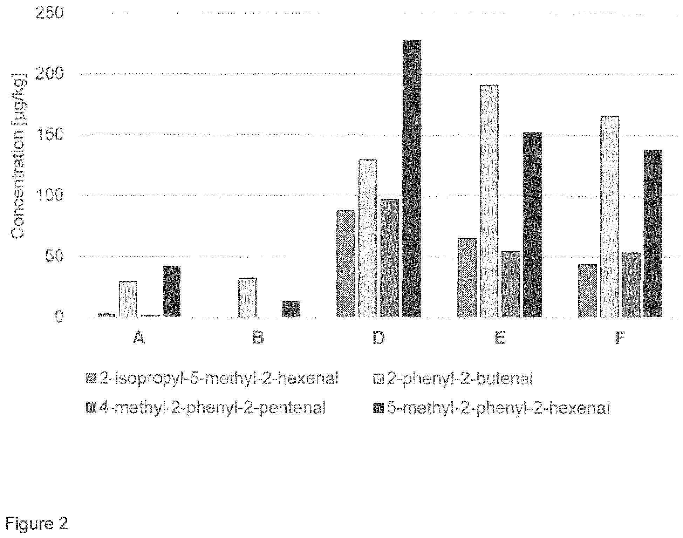

The inventors have surprisingly found that the quantities of alkyl and phenyl alkenals in the cocoa product according to the present invention are significantly increased as compared to comparative samples (Table 4 and Figure 2). Interestingly, two of these volatiles, namely 2-isopropy-5-methyl-2-hexenal and 4-methyl-2-phenyl-2-pentenal, were not present or barely detectable in the comparative examples but highly present in the cocoa product according to the present invention. Elevated amounts of these volatiles have the advantage of improving the intensity of cocoa flavour in the cocoa product.

Alkyl alkenals can be selected from the group of 3-methyl-2-butenal and 2-isopropyl-5-methyl-2-hexenal and phenyl alkenals can be selected from the group of 2-phenyl-2-butenal, 4-methyl-2-phenyl-2-pentenal and 5-methyl-2-phenyl-2-hexenal.

In one embodiment the cocoa product comprises at least 10 µg/kg of 2-isopropyl-5-methyl-2-hexenal and at least 10 µg/kg of 4-methyl-2-phenyl-2-pentenal, preferably at least 20 µg/kg of 2-isopropyl-5-methyl-2-hexenal and at least 20 µg/kg of 4-methyl-2-phenyl-2-pentenal, more preferably at least 30 µg/kg of 2-isopropyl-5-methyl-2-hexenal and at least 30 µg/kg of 4-methyl-2-phenyl-2-pentenal, even more preferably at least 40 µg/kg of 2-isopropyl-5-methyl-2-hexenal and at least 40 µg/kg of 4-methyl-2-phenyl-2-pentenal.

In one embodiment the cocoa product comprises between 10 µg/kg and 1000 µg/kg of 2-isopropyl-5-methyl-2-hexenal and between 10 µg/kg and 1000 µg/kg of 4-methyl-2-phenyl-2-pentenal, preferably between 20 µg/kg and 1000 µg/kg of 2-isopropyl-5-methyl-2-hexenal and between 20 µg/kg and 1000 µg/kg of 4-methyl-2-phenyl-2-pentenal, more preferably between 30 µg/kg and 1000 µg/kg of 2-isopropyl-5-methyl-2-hexenal and between 30 µg/kg and 1000 µg/kg of 4-methyl-2-phenyl-2-pentenal, even more preferably between 40 µg/kg and 1000 µg/kg of 2-isopropyl-5-methyl-2-hexenal and between 40 µg/kg and 1000 µg/kg of 4-methyl-2-phenyl-2-pentenal.

The advantage of the present invention is that the cocoa product contains elevated amount of antioxidant compounds and elevated amount of aromatic, volatile compounds which altogether confer interesting antioxidant properties associated with an intense, natural cocoa flavour and aroma to the cocoa product.

The cocoa product according to the present invention can be in liquid, concentrated or extract form, or in dry, powder form. It can advantageously be used to prepare beverages, either liquid, ready-to-drink or powdered beverages, by mixing the cocoa product with other ingredients. For example, the cocoa product can be mixed with roast and ground coffee, soluble coffee powder, coffee extract, dairy product, non-dairy or dairy creamer or chicory. The cocoa product can also be used in a capsule or in a beverage system. The cocoa product of the present invention has the advantage that in the powdered form, it is easily dissolvable in hot or cold liquid.

In another aspect the present invention relates to a process for manufacturing a cocoa product comprising the steps of
a. providing roast and ground cocoa nibs;
b. extracting first said roast and ground cocoa nibs with water at temperature between 95°C and 115°C at a draw-off ratio between 2 to 4, for 20 to 40 minutes;
c. further extracting the roast and ground cocoa nibs of step b) with water at temperature between 160°C and 180°C at a draw-off ratio between 2 and 4, for a duration of between 20 to 40 minutes; and optionally
d. evaporating the extract to obtain a concentrated cocoa composition.

The process may further comprise the step of drying the concentrate. Preferably, drying is performed by spray drying or freeze drying.

In one embodiment the extract obtained in step d) can be dried using drying methods well-known in the art, such as freeze-drying or spray-drying. If freeze drying is used to dry the extract, it may be desirable no to evaporate the extract, accordingly, in one embodiment, the extract obtained in step c. is dried by freeze drying.

In the context of the present invention, the "draw-off ratio" refers to the ratio of water to cocoa nibs. A draw off ratio of 2 means that 2kg of water are used to extract 1kg of cocoa nibs.

The term "cocoa nibs" refers to roasted cocoa beans that have been crushed or milled into small pieces. The roast and ground cocoa nibs provided in step a) of the process have preferably a particle size comprised between 2 and 5 mm, in order to have efficient extraction.

The inventors have found that the process of the present invention unexpectedly preserves or even increases the amount of antioxidant compounds, such as epicatechin. The process also advantageously favoured the formation of volatile compounds responsible for cocoa flavours.

Further advantages and features of the present invention are apparent from the figures and non-limiting examples.

### Examples

### Example 1: Method for preparation of the cocoa product and of comparative samples ingredient

Cocoa products according to the present invention were prepared as follows. 4.4 kg of cocoa nibs was filled in a 7 liters cylindrical extraction cell and extracted with water in two steps. The first step involved extraction for 36 minutes with water at a temperature of 110 °C and at a draw-off ratio (kg water / kg of cocoa nibs) of 3. The second step involved further extraction for 36 minutes with water at 170 °C at a draw-off ratio of 3. The resultant cocoa extract was then concentrated and freeze dried to afford a water-soluble cocoa powder.

The comparative samples were prepared to obtain a lyophilized water-soluble cocoa powder. 15 g of commercially available cocoa powder (non-alkalized or alkalized cocoa product) was suspended in 100 ml water and boiled under reflux for 4 hours until reaching the end point in total dissolved solids. After centrifugation (1000 rpm, 15 min at 20°C), the supernatant was frozen at -20°C prior to lyophilization, resulting in a water-soluble cocoa powder.
Sample A = non-alkalized commercial natural cocoa powder
Sample B = alkalized commercial cocoa powder
Sample C = medium alkalized commercial cocoa powder
Samples D, E and F = cocoa products according to the invention prepared as described above.

### Example 2: Analysis of chemical compounds

### 2.1 Analysis of epicatechin, procyanidins and theobromine

The analysis of epicatechin, procyanidins and theobromine was performed on a QTRAP 6500 LC-MS/MS system (AbSciex), operating in multiple reaction monitoring (MRM) mode.

Prior to the instrumental analysis, the soluble cocoa powders (25 mg) were each dissolved in 25 mL of water, followed by membrane filtration.

To perform the chromatography, an Agilent 1290 Infinity II system (Agilent) was used, equipped with a binary G7104A pump, an G7167B auto sampler cooled to 4 °C, and a G7116B column oven heated to 30 °C. The samples (5 µL) were injected in a triplicate determination onto a Kinetex Phenyl-Hexyl 100 mm × 2.1 mm × 1.7 µm column (Phenomenex), using 0.1% aqueous formic acid (A) and 0.1% formic acid in acetonitrile (B) as mobile phase. At flow rate of 0.4 mL/min, the following gradient was applied: 0% B for 1 min, up to 35% B in 10 min, then in 2 min to 100% B and kept for 3.5 min before going to starting conditions in 0.5 min and kept for 3 min.

The LC-system was coupled with a QTRAP 6500 mass spectrometer (AbSciex), using Analyst (version 1.7.1) as software. Thereby, the source conditions for application of the positive ESI mode were the following: gas 1: 55 psi, gas 2: 65 psi, curtain gas: 35 psi, source temperature: 550°C, ion spray voltage floating: 5500 V. For the MS/MS detection in multiple reaction monitoring (MRM) mode, the following mass transitions were applied, with each one quantifier (Q) and one qualifier mass transition per compound:

**Table 1 - Applied MS/MS detection parameters in multiple reaction monitoring (MRM) mode with Q1= Precursor Ion m/z, Q3= Fragmentation Ion m/z, DP= Declustering Potential, EP= Entrance Potential, CE= Collision Energy, CXP= Collision Cell Exit Potential.**

| **Name** | **Q1** | **Q3** | **DP** | **EP** | **CE** | **CXP** |
|---|---|---|---|---|---|---|
| Epicatechin Q | 291 | 139 | 41 | 10 | 23 | 6 |
| Epicatechin | 291 | 123 | 41 | 10 | 23 | 14 |
| Procyanidin B2 Q | 579 | 127 | 80 | 10 | 29 | 6 |
| Procyanidin B2 | 579 | 139 | 80 | 10 | 35 | 14 |
| Procyanidin C1 Q | 867 | 579 | 80 | 10 | 23 | 20 |
| Procyanidin C1 | 867 | 245 | 80 | 10 | 61 | 30 |
| Caffeine Q | 195 | 138 | 56 | 10 | 43 | 12 |
| Caffeine | 195 | 123 | 56 | 10 | 43 | 12 |
| 5-chlorogenic acid | 355 | 267 | 106 | 10 | 27 | 14 |
| Theobromine Q | 181 | 163 | 41 | 10 | 25 | 14 |
| Theobromine | 181 | 108 | 41 | 10 | 35 | 12 |

Data treatment was performed by MultiQuant (AbSciex, version 3.0.2), and the absolute values were determined based on an external calibration, diluting stepwise stock solutions of the individual analytes (epicatechin: 70 mg/L, procyanidin B2: 38 mg/L, procyanidin C1: 39 mg/L and theobromine: 67 mg/L).

**Table 2 - Epicatechin, procyanidins and theobromine - amounts in % by weight**

| Samples | Epicatechin | Procyanidin C1 | Procyanidin B2 | Theobromine |
|---|---|---|---|---|
| A | 0.53 | < 0.0004 | 0.07 | 3.6 |
| B | 0.20 | < 0.0004 | 0.002 | 3.6 |
| D | 1.06 | 0.06 | 0.22 | 3.9 |
| E | 1.20 | 0.07 | 0.27 | 3.8 |
| F | 1.19 | 0.07 | 0.25 | 3.8 |

### 2.2. Quantification of alkyl and phenyl alkenals

Metabolite profiling of the samples was conducted by gas chromatography coupled to quadrupole time-of-flight mass spectrometry (GC-QTOF-MS).

The absolute amounts (in µg/kg) of identified volatile alkenals were determined in the cocoa product according to the invention (samples D, E, and F) as well as in the reference extracted samples (samples A and B). For this purpose, the standard addition method was applied, whereby the standard was added directly to the aliquots of analyzed sample.

### Sample preparation

The soluble cocoa powders (500 mg, each) were provided into three silanised glass vials (20 mL vials used for headspace/SPME analysis) and solubilized with 5 mL of water, each, and sealed with a screwing septum cap.

For the quantitative evaluation the samples were spiked with 20 µl of standard solution of the respective alkenal molecules at three levels (around 1, 2, and 3 µg/mL), and sealed with a screwing septum cap.

### Extraction of aroma

The sample was equilibrated for 60 min at room temperature. Aroma compounds were then extracted from the headspace by solid phase microextraction (SPME) at 50 °C during 30 min (2 cm fiber, 50/30 µm StableFlex, coated with PDMS/DVB/Carboxen; Supelco, Buchs, Switzerland), and thermally desorbed into the split-splitless injector (in split-mode; split of 2) heated at 240 °C for 3 min.

### GC/MS analysis

Qualitative and quantitative metabolite analysis was carried out using an Agilent 7200 QTOF-GC/MS system consisting of an Agilent 7890B gas chromatograph with a 7200 UHD accurate-mass QTOF mass spectrometer (Agilent, Basel, Switzerland).

Separation was carried out on a 60 m × 0.25 mm × 0.25 µm polar DB-624UI column (Agilent, Basel, Switzerland), and Helium was used as carrier gas with a constant flow of 1.0 mL/ min. Following oven program was applied: initial temperature of 40 °C was held for 2 min, raised at 5 °C/min to 200 °C, then at 20 °C/min to 240 °C, and final temperature held for 10 min.

Detection was performed by electron impact mode with ionization energy of 70 eV at the full mass scanning range from 30 to 250 amu at a spectra acquisition rate of 5 spectra/s.

### Data consolidation

Chromatograms were processed using the Agilent MassHunter software (Agilent, Basel, Switzerland), and the components were identified by comparison of their mass spectra with those in the NIST MS 14.0 Library and confirmed by comparison of their retention indices. The exact m/z and tolerance applied for the peak extraction and quantification of alkenals are given in Table 3.

**Table 3 - Exact m/z and tolerance applied for peak extraction and quantification of alkenals.**

| Compound | m/z (amu) | m/z tolerance (amu) |
|---|---|---|
| 2-isopropyl-5-methyl-2-hexenal | 139.1090 | +/- 0.02 |
| 2-phenyl-2-butenal | 146.0749 | +/- 0.02 |
| 4-methyl-2-phenyl-2-pentenal | 174.1014 | +/- 0.02 |
| 5-methyl-2-phenyl-2-hexenal | 117.0635 | +/- 0.02 |

The results in Table 4 reveal significantly higher concentrations of the identified alkenals in the cocoa products (samples D, E, F) according to the present invention as compared to the reference samples (samples A and B) extracted at boiling temperature (around 98 °C).

**Table 4 - Concentrations of alkyl and phenyl alkenals in [µg/kg]**

| Samples | Concentration [µg/kg] | | | |
|---|---|---|---|---|
| | 2-isopropyl- 5-methyl-2- hexenal | 2-phenyl-2- butenal | 4-methyl-2- phenyl-2- pentenal | 5-methyl-2-phenyl-2-hexenal |
| A | 2.3 | 29.0 | 1.1 | 41.6 |
| B | < 1 | 31.7 | < 1 | 13.0 |
| D | 43.5 | 166 | 53.3 | 137 |
| E | 65.0 | 191 | 54.1 | 152 |
| F | 87.5 | 130 | 96.9 | 228 |

The quantities of the lavender and herbaceous, cocoa smelling 2-isopropyl-5-methyl-2-hexenal were determined at a range of 44 to 88 µg/kg in the three analyzed invention samples. In contrast, an amount of only 2.3 µg/kg was found in the natural, non-alkalized reference (sample A), and the quantity was below the detection/quantitation level in the alkalized reference (sample B).

Similarly, 4-methyl-2-phenyl-2-pentenal (floral, honey, powdery, and cocoa-like) was almost uniquely found in the invention samples, with concentrations ranging between 53.3 and 96.9 µg/kg, but merely around detection level in the comparative samples A and B. This volatile component is formed in an aldol condensation of phenylacetaldehyde and methylpropanal.

The floral, cocoa, and honey-like 2-phenyl-2-butenal, a product from the condensation reaction of phenylacetaldehyde and acetaldehyde, was determined at 130 to 191 µg/kg in the invention samples, and from 29 to 31.7 µg/kg in the comparative samples A and B.

5-methyl-2-phenyl-2-hexenal (cocoa, nutty, green) is generated from phenylacetaldehyde and 3-methylburtanal by aldol condensation. The concentrations were quantified from 137 to 228 µg/kg in the invention samples and were significantly lower in the comparative samples at 13.0 and 41.6 µg/kg.

In conclusion, the results demonstrated that the extraction conditions applied in the frame of present invention strongly favor the generation of identified alkenals from the aldol condensation of Strecker aldehydes. Particularly 2-isopropyl-5-methyl-2-hexenal and 4-methyl-2-phenyl-2-pentenal seem to be unique marker for the cocoa extraction as described in the invention application. In addition, 2-phenyl-2-butenal and 5-methyl-2-phenyl-2-hexenal were by factor 4 to 17 higher in the invention samples as compared to the colder extracted reference cocoa products, and hence are additional indicator for the specific conduct of the invention.

### 2.3 Determination of the antioxidant capacity

Samples of cocoa products were prepared as described in the Example 1.

Antioxydants were quantified by assessing the sample capacity to bleach the colour of a free radical ABTS (Di-ammonium 2,2'-Azino-bis(3-ethylbenzothiazoline-6-sulfonic acid) solution. The methods used is based on the work of Serpen et al., 2008 and Serpen et al., 2007.

In practice, samples are diluted 1:100 (weight/weight) with cellulose powder. A stock solution of ABTS is made by dissolving 192 mg of ABTS and 33 mg de K2S2O8 in 25 mL of ultra-pure water. The working solution of ABTS should be freshly prepared everyday by diluting 700µL of the ABTS stock solution into 100mL EtOH 50%.

In a tube, 20 mg of the diluted samples are mixed with 2mL of ethanol (50%) and 10 mL of the ABTS working solution. Samples are kept gently agitated for 20 min at room temperature and subsequently centrifuged 2 min at 9200g. 35 min precisely after the addition of the ABTS solution, the absorbance of supernatants is measured at 734nm. All sample are analysed in triplicate. Calibration curves is built by following the same protocol but replacing sample with a Trolox (6-hydroxy-2,5,7,8-tetramethyl-chroman-2-carboxylic acid) solution (0.002 - 0.02 µmol/mL). Antioxidant capacity of samples is expressed in µmol/mg Trolox equivalent (TE).

**Table 5 - Antioxidant capacity (µmol TE/kg)**

| Samples | (µmol TE/kg) |
|---|---|
| A | 608 |
| B | 763 |
| D | 1111 |
| E | 1018 |
| F | 841 |

As can be seen in Table 5 and Figure 3, the cocoa products according to the present invention (samples D, E and F) demonstrate significantly more antioxidant capacity as compared to the comparative samples A and B. Without to be bound to the theory, the inventors believe that this is due to the elevated amounts of antioxidant compounds, namely epicatechin, procyanidin B2 and procyanidin C1 found in the cocoa products D, E and F.

### Example 3: use of the cocoa product

### Cocoa beverage composition

The cocoa powder prepared as describe in Example 1 was mixed in different ratios with soluble coffee powder, starting from 5% up to 60% cocoa powder. Upon addition of hot water (85°C), the beverage powder easily and completely dissolved to afford an intense cocoa-coffee drink.

### Cocoa containing capsules

1.5g capsules to be used in system were prepared by mixing different ratios (from 30% up to 60%) of cocoa powder prepared as described in Example 1 with soluble coffee. The beverage was prepared and delivered an intense cocoa-coffee drink.

## Claims

1. Cocoa product comprising a ratio of epicatechin in % by weight to theobromine in % by weight of at least 0.2, a ratio of procyanidin C1 in % by weight to theobromine in % by weight of at least 0.005 and a ratio of procyanidin B2 in % by weight to theobromine in % by weight of at least 0.04.

2. A cocoa product according to claim 1 comprising between 0.8% to 4% by weight of epicatechin.

3. A cocoa product according to claim 1 or 2 comprising between 0.01% to 1% by weight of procyanidin C1.

4. A cocoa product according to any of the preceding claims comprising between 0.15% to 1% by weight of procyanidin B2.

5. A cocoa product according to any of the preceding claims comprising at least 145 µg/kg alkyl and phenyl alkenals.

6. A cocoa product according to any of the preceding claims comprising at least 10 µg/kg of 2-isopropyl-5-methyl-2-hexenal and at least 10 µg/kg of 4-methyl-2-phenyl-2-pentenal.

7. A cocoa product according to any of the preceding claims, wherein said ingredient is in the form of a liquid, of a concentrate, of an extract or of a powder.

8. A cocoa product according to any of the preceding claims, wherein said cocoa product is mixed with roast and ground coffee, soluble coffee powder, coffee extract, dairy product, non-dairy or dairy creamer, chicory or combination thereof.

9. Use of the cocoa product according to any of the preceding claims for producing a ready-to-drink beverage or a powdered beverage or for being used in a capsule and/or a beverage system.

10. A process for manufacturing a cocoa product according to claim 1 to 8 comprising the steps of
a. providing roast and ground cocoa nibs;
b. extracting first said roast and ground cocoa nibs with water at temperature between 95°C and 115°C at a draw-off ratio between 2 to 4, for 20 to 40 minutes;
c. further extracting the roast and ground cocoa nibs of step b) with water at temperature between 160°C and 180°C at a draw-off ratio between 2 and 4, for a duration of between 20 to 40 minutes; and optionally
d. evaporating the extract to obtain a concentrated cocoa composition.

11. A process according to claim 10 further comprising the step of drying the concentrate.

12. A process according to claim 11 wherein drying is performed by spray drying or freeze drying.

## Patentansprüche

1. Kakaoprodukt, umfassend ein Verhältnis von Epicatechin in Gew.-% zu Theobromin in Gew.-% von mindestens 0,2, ein Verhältnis von Procyanidin C1 in Gew.-% zu Theobromin in Gew.-% von mindestens 0,005 und ein Verhältnis von Procyanidin B2 in Gew.-% zu Theobromin in Gew.-% von mindestens 0,04.

2. Kakaoprodukt nach Anspruch 1, umfassend zu zwischen 0,8 Gew.-% bis 4 Gew.-% Epicatechin.

3. Kakaoprodukt nach Anspruch 1 oder 2, umfassend zu zwischen 0,01 Gew.-% bis 1 Gew.-% Procyanidin C1.

4. Kakaoprodukt nach einem der vorstehenden Ansprüche, umfassend zu zwischen 0,15 Gew.-% bis 1 Gew.-% Procyanidin B2.

5. Kakaoprodukt nach einem der vorstehenden Ansprüche, umfassend mindestens 145 µg/kg Alkyl- und Phenylalkenale.

6. Kakaoprodukt nach einem der vorstehenden Ansprüche, umfassend mindestens 10 µg/kg 2-Isopropyl-5-methyl-2-hexenal und mindestens 10 µg/kg 4-Methyl-2-phenyl-2-pentenal.

7. Kakaoprodukt nach einem der vorstehenden Ansprüche, wobei die Zutat in der Form einer Flüssigkeit, eines Konzentrats, eines Extrakts oder eines Pulvers vorliegt.

8. Kakaoprodukt nach einem der vorstehenden Ansprüche, wobei das Kakaoprodukt mit geröstetem und gemahlenem Kaffee, löslichem Kaffeepulver, Kaffeeextrakt, einem Milchprodukt, einem Nichtmilch- oder Milch-Kaffeeweißer, Zichorie oder einer Kombination davon gemischt ist.

9. Verwendung des Kakaoprodukts nach einem der vorstehenden Ansprüche zum Produzieren eines trinkfertigen Getränks oder eines pulverförmigen Getränks oder um in einer Kapsel und/oder einem Getränkesystem verwendet zu werden.

10. Verfahren zum Herstellen eines Kakaoprodukts nach den Ansprüchen 1 bis 8, umfassend die Schritte
a. Bereitstellen von geröstetem und gemahlenem Kakaokernbruch;
b. Extrahieren des gerösteten und gemahlenen Kakaokernbruchs zunächst mit Wasser bei einer Temperatur zwischen 95 °C und 115 °C bei einem Abzugsverhältnis zwischen 2 und 4, 20 bis 40 Minuten lang;
c. weiteres Extrahieren des gerösteten und gemahlenen Kakaokernbruchs aus Schritt b) mit Wasser bei einer Temperatur zwischen 160 °C und 180 °C bei einem Abzugsverhältnis zwischen 2 und 4, für eine Dauer zwischen 20 und 40 Minuten; und wahlweise
d. Abdampfen des Extrakts, um eine konzentrierte Kakaozusammensetzung zu erhalten.

11. Verfahren nach Anspruch 10, ferner umfassend den Schritt eines Trocknens des Konzentrats.

12. Verfahren nach Anspruch 11, wobei das Trocknen durch ein Sprühtrocknen oder ein Gefriertrocknen durchgeführt wird.

## Revendications

1. Produit de cacao comprenant un rapport d'épicatéchine en % en poids sur théobromine en % en poids d'au moins 0,2, un rapport de procyanidine C1 en % en poids sur théobromine en % en poids d'au moins 0,005 et un rapport de procyanidine B2 en % en poids sur théobromine en % en poids d'au moins 0,04.

2. Produit de cacao selon la revendication 1, comprenant entre 0,8 % et 4 % en poids d'épicatéchine.

3. Produit de cacao selon la revendication 1 ou 2, comprenant entre 0,01 % et 1 % en poids de procyanidine C1.

4. Produit de cacao selon l'une quelconque des revendications précédentes, comprenant entre 0,15 % et 1 % en poids de procyanidine B2.

5. Produit de cacao selon l'une quelconque des revendications précédentes, comprenant au moins 145 µg/kg d'alcénals d'alkyle et de phényle.

6. Produit de cacao selon l'une quelconque des revendications précédentes, comprenant au moins 10 µg/kg de 2-isopropyl-5-méthyl-2-hexénal et au moins 10 µg/kg de 4-méthyl-2-phényl-2-penténal.

7. Produit de cacao selon l'une quelconque des revendications précédentes, dans lequel ledit ingrédient se présente sous la forme d'un liquide, d'un concentré, d'un extrait ou d'une poudre.

8. Produit de cacao selon l'une quelconque des revendications précédentes, dans lequel ledit produit de cacao est mélangé à du café torréfié et moulu, à de la poudre de café soluble, à un extrait de café, à un produit laitier, à une crème non laitière ou laitière, à de la chicorée ou leur combinaison.

9. Utilisation du produit de cacao selon l'une quelconque des revendications précédentes pour produire une boisson prête-à-boire ou une boisson en poudre ou pour être utilisé dans une capsule et/ou un système de boisson.

10. Procédé de préparation d'un produit de cacao selon la revendication 1 à 8, comprenant les étapes consistant à
a. fournir des éclats de cacao torréfiés et moulus ;
b. extraire d'abord lesdits éclats de cacao torréfiés et moulus avec de l'eau à une température comprise entre 95 °C et 115 °C à un rapport de soutirage compris entre 2 et 4, pendant 20 à 40 minutes ;
c. extraire ensuite les éclats de cacao torréfiés et moulus de l'étape b) avec de l'eau à une température comprise entre 160 °C et 180 °C, à un rapport de soutirage compris entre 2 et 4, pendant une durée comprise entre 20 et 40 minutes ; et éventuellement
d. évaporer l'extrait pour obtenir une composition de cacao concentrée.

11. Procédé selon la revendication 10, comprenant en outre l'étape consistant à sécher le concentré.

12. Procédé selon la revendication 11, dans lequel le séchage est effectué par séchage par atomisation ou lyophilisation.
